# EUROPÄISCHE PATENTANMELDUNG

(11) **EP 2 248 603 A2**
(43) Veröffentlichungstag der Anmeldung: **10.11.2010**
(21) Anmeldenummer: 10004588.9
(22) Anmeldetag: 30.04.2010
(51) Int. Cl.: B07B 1/42, B06B 1/04, F16F 15/00, G05B 13/02

(54) **Laborsiebmaschine mit einer Vollwellensteuerung ihres elektro-magnetischen Antriebs**

(30) Priorität: 06.05.2009 DE 102009019862
(71) Anmelder: Retsch GmbH, 42781 Haan (DE)
(72) Erfinder: Hamacher, Bernd, 41542 Dormagen (DE); Mähler, Stefan, Dr.-Ing., 42551 Velbert (DE)
(74) Vertreter: Müller, Karl-Ernst

(57) **Zusammenfassung**

Eine Laborsiebmaschine mit einem elektro-magnetischen Antrieb, wobei der gegenüber dem Gehäuse beweglich angeordnete Siebträger (12) über Federn (13) gegen das Gehäuse abgestützt und mittels eines an ihm befestigten Ankers (14) von einem gehäuseseitig angeordneten, frequenzerregten Elektromagneten (11) beaufschlagt ist, ist **dadurch gekennzeichnet, dass** der Elektromagnet (11) mit einer in Frequenz und/oder Amplitude verstellbaren sinusförmigen Spannung versorgt wird.

## Beschreibung

### Beschreibung

Die Erfindung betrifft eine Laborsiebmaschine mit einem elektromagnetischen Antrieb, wobei der gegenüber dem Gehäuse beweglich angeordnete Siebträger über Federn gegen das Gehäuse abgestützt und mittels eines an ihm befestigten Ankers von einem gehäuseseitig angeordneten, frequenzerregten Elektromagneten beaufschlagt ist.

Eine Laborsiebmaschine mit den vorgenannten Merkmalen ist in der DE 196 23 227 A1 beschrieben. Durch Erregen des am Gehäuse angeordneten Elektromagneten wird der an dem Siebträger befestigte Anker von dem Elektromagneten angezogen, wobei die den Siebträger gegenüber dem Gehäuse abstützenden Federn gespannt werden. Nach Abschalten des Elektromagneten werden die gespannten Federn losgelassen und bewegen den Siebträger einschließlich der von ihm getragenen Massen von Sieben und darauf liegendem Siebgut nach oben von dem Elektromagneten weg. Insofern werden die betroffenen Massen im Takt der Erregung des Elektromagneten, der sogenannten Erregerfrequenz, auf und ab bewegt.

Zur Einstellung der Erregerfrequenz wird die aus der Wechselspannung des Netzes umgewandelte Gleichspannung mit einer über einen Rechteckwellengenerator bewirkten pulsweitenmodulierten Ansteuerung zur Versorgung des Elektromagneten herangezogen, wobei der Generator hinsichtlich seiner Frequenz steuerbar ist. Soweit Siebergebnisse nur dann vergleichbar sind, wenn neben den verwendeten Siebgrößen und der Siebdauer auch die Schwingungsamplituden und die Schwingungsfrequenzen übereinstimmen, kann eine Steuerung der Laborsiebmaschine über die als Funktion der Schwingungsamplituden und der Schwingungsfrequenzen zu ermittelnde Maschinenbeschleunigung als Richtwert erfolgen. Dieser Zusammenhang ist in der ebenfalls der Gattung entsprechenden DE 196 25 808 B4 erläutert. Der Begriff Schwingungsamplitude bezeichnet die Schwingweite als den vollen Weg der Bewegung des Siebträgers und der darauf befindlichen Siebe. Der Begriff Schwingungsfrequenz bezeichnet die Siebfrequenz des Siebträgers und der darauf befindlichen Siebe.

Mit der Pulsweitenmodulation der Erregerspannung bei den bekannten Laborsiebmaschinen ist der Nachteil verbunden, dass diese Steuerung für Laborsiebmaschinen mit einer hohen Last, dass heißt mit einer entsprechend großen Anzahl von Sieben oder Sieben mit großen Siebabmessungen und entsprechend hohen Siebbeladungen, ungeeignet ist. Soweit die Schwingweite des Siebträgers nur durch die Impulsbreite, also die Einschaltdauer für die Energieversorgung des Elektromagneten bei konstantem Spannungsniveau der Einzelimpulse, variiert werden kann, kann diese Impulsbreite für eine gegebene Erregerfrequenz nicht beliebig vergrößert werden, ohne die Form der Grundschwingung des Systems und damit die den Richtwert für die Steuerung bildende Maschinenbeschleunigung zu verändern. In der Praxis hat sich gezeigt, dass die Impulsbreite höchstens 10% bis 15% der Periodendauer der pulsweitenmodulierten Spannung und damit der Siebschwingung betragen kann. Somit kann nur während dieses kurzen Zeitraums Energie zugeführt werden. Bei hohen Lasten nun gelangt diese Anregungsform an ihre physikalischen Grenzen, da aufgrund der rechteckförmigen Anregung des Elektromagneten mit zunehmender Spannung und Impulsbreite immer größere Verluste entstehen. Dies wird dadurch verursacht, dass die rechteckförmige Anregung einen großen Anteil an Frequenzen enthält, die entfernt von der Siebfrequenz bzw. der Frequenz der beladenen Siebmaschine liegen.

Der Erfindung liegt daher die Aufgabe zugrunde, bei einer Laborsiebmaschine mit den gattungsgemäßen Merkmalen eine effiziente Regelung für die Schwingweite des Siebträgers auch bei leistungsstarken und für hohe Lasten ausgelegten Laborsiebmaschinen einzurichten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der Elektromagnet mit einer in Frequenz und/oder Amplitude verstellbaren sinusförmigen Spannung versorgt wird. Damit beruht die Erfindung auf dem Prinzip, dass für den elektro-magnetischen Antrieb eine Vollwellensteuerung vorgesehen ist, so dass der Elektromagnet über die gesamte Periode des Schwingweges der Laborsiebmaschine mit Energie versorgt wird. Dabei wird die Schwingweite über die Größe der sinusförmigen Spannung variiert; grundsätzlich ist aber auch eine Veränderung über die Frequenz denkbar.

Nach einem Ausführungsbeispiel der Erfindung ist vorgesehen, dass bei Ausführung des an dem Siebträger befestigten Ankers aus einem dauermagnetischen Material die Grundfrequenz der sinusförmigen Versorgungsspannung des Elektromagneten der Siebfrequenz der Laborsiebmaschine entspricht. Alternativ kann vorgesehen sein, dass bei Ausführung des an dem Siebträger befestigten Ankers aus einem nicht-magnetischen, jedoch magnetisierbaren Werkstoff die Grundfrequenz der sinusförmigen Versorgungsspannung des Elektromagneten der halben Siebfrequenz der Laborsiebmaschine entspricht.

Nach einem Ausführungsbeispiel der Erfindung ist vorgesehen, dass die Größe der sinusförmigen Spannung bei gleich bleibender Frequenz zur Einstellung der Schwingweite des Siebträgers verwendet wird. In einer alternativen Ausführungsform kann entsprechend vorgesehen sein, dass die Höhe der Frequenz der sinusförmigen Spannung bei gleich bleibendem Effektivwert der Spannung zur Einstellung der Schwingweite des Siebträgers verwendet wird.

In alternativen Ausführungsbeispielen der Erfindung kann vorgesehen sein, dass die sinusförmige Spannung analog erzeugt oder aus einzelnen Spannungsimpulsen zusammengesetzt wird.

Die Erfindung eignet sich zur Anwendung auf Laborsiebmaschinen, bei denen runde oder auch eckige Siebe vorzugsweise mit einer Siebkörperabmessung > 300mm zum Einsatz kommen.

In der Zeichnung ist ein Ausführungsbeispiel der Erfindung wiedergegeben, welches nachstehend beschrieben ist. Es zeigen:
- Fig. 1: den grundsätzlichen Aufbau einer einen elektromagnetischen Antrieb aufweisenden Laborsiebmaschine in einer schematischen Darstellung,
- Fig. 2: den Spannungsverlauf, den zugehörigen Stromverlauf und den resultierenden Wegverlauf des Siebträgers im eingeschwungenen Zustand über der Zeit bei einer pulsweitenmodulierten Ansteuerung nach dem Stand der Technik,
- Fig. 3: den Verlauf des Stroms durch den Magneten, die resultierende magnetische Kraft und den Weg des Siebträgers einer erfindungsgemäß mit Vollwellensteuerung angesteuerten Laborsiebmaschine über der Zeit.

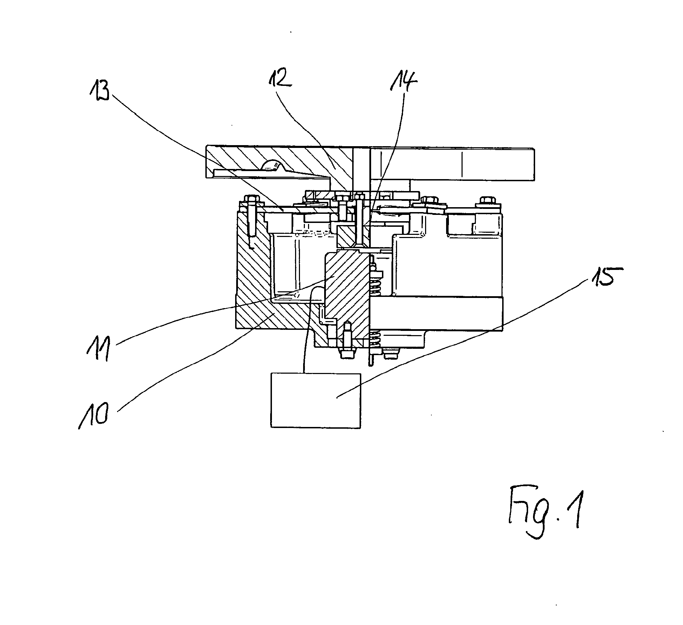

Der in Figur 1 schematisch dargestellte Aufbau einer Laborsiebmaschine ist aus dem Stand der Technik bekannt. Auf einer gehäuseseitigen Grundplatte 10 ist ein Elektromagnet 11 befestigt. Über dem Elektromagneten 11 ist ein Siebträger 12 angeordnet, der auf Federn 13 gegenüber dem Gehäuse abgestützt ist. An dem Siebträger 12 ist ein Anker 14 befestigt, der mit dem Elektromagneten 11 in Wechselwirkung steht. Mit Hilfe einer zugeordneten Stromquelle 15 wird der Elektromagnet 11 mit Energie versorgt.

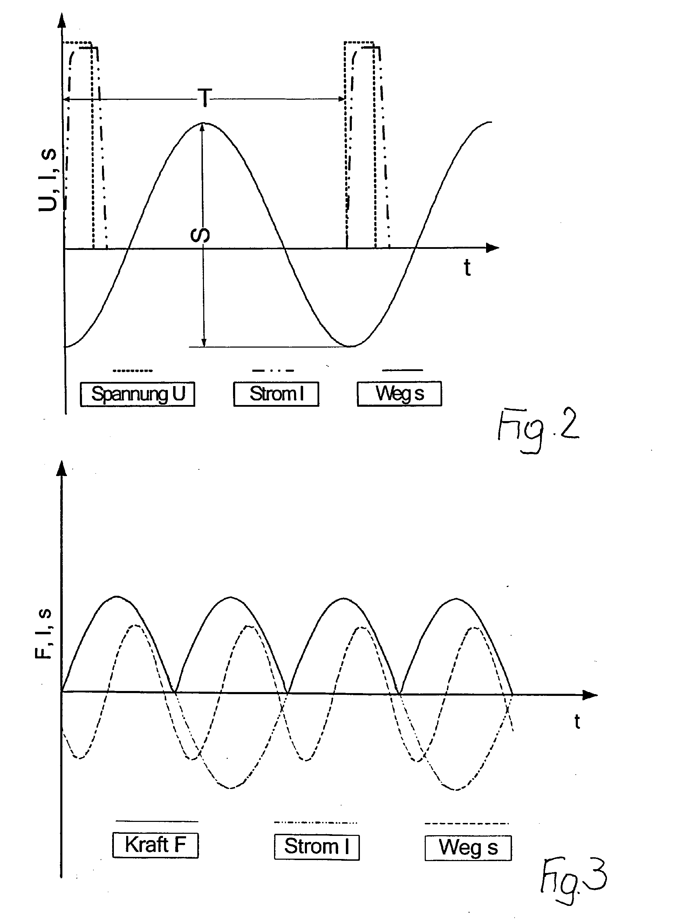

Soweit in Figur 2 zur besseren Erläuterung der zwischen dem Stand der Technik und der Erfindung bestehenden Unterschiede in der Ansteuerung des Elektromagneten eine pulsweitenmodulierte Ansteuerung dargestellt ist, zeigt Figur 2 den Spannungsverlauf U(t), den zugehörigen Stromverlauf I(t) und den resultierenden Wegverlauf s(t) des Siebträgers im eingeschwungenen Zustand über der Zeit. Dabei wird die Erregerfrequenz durch die Periodendauer T der pulsweitenmodulierten Spannung bestimmt, während die Schwingweite S des Siebträgers durch die Impulsbreite variiert werden kann. Das Spannungsniveau der Einzelimpulse bleibt dabei konstant. Die Impulsbreite kann für eine gegebene Frequenz nicht beliebig vergrößert werden, ohne die Form der Grundschwingung und damit die Maschinenbeschleunigung zu verändern. Da dem System nur während der Impulsdauer Energie zugeführt werden kann, ist diese Antriebsart für hohe Lasten ungeeignet, da durch die rechteckförmige Anregung des Elektromagneten mit zunehmender Spannung und Impulsbreite immer größere Verluste entstehen.

Soweit in Figur 3 die erfindungsgemäße Vollwellensteuerung für den Elektromagneten mit dem Verlauf des Stromes I durch den Magneten, der resultierenden magnetischen Kraft F und dem Weg s des Siebträgers der Laborsiebmaschine über der Zeit t dargestellt ist, erzeugt die Stromquelle 15 einen sinusförmigen Strom in der Spule des Elektromagneten 11, so dass dieser eine ebenfalls sinusförmige elektromagnetische Kraft auf den Anker 14 ausübt. Bei dem dargestellten Ausführungsbeispiel wird ein aus einem nichtdauermagnetischen Werkstoff bestehender Anker 14 vorausgesetzt. Daher wirkt die durch den Strom I hervorgerufene magnetische Kraft F bezogen auf den Anker 14 immer in die gleiche Richtung. Die magnetische Kraft F besitzt einen harmonischen Verlauf über jeweils eine halbe Periode, und ihre Wirkung ist kontinuierlich während einer Schwingungsperiode gegeben. Im Gegensatz zur aus dem Stand der Technik bekannten Pulsweitenmodulation wird keine Energie durch Oberwellen jenseits der Eigenfrequenz der Laborsiebmaschine dissipiert.

Bei Verwendung eines aus einem dauermagnetischen Material bestehenden Ankers 14 muss die Frequenz der Sinusspannung gleich der Siebfrequenz der Laborsiebmaschine sein, um die gleiche Wirkung zu erzielen.

Die sinusförmige Spannung kann analog mittels eines Oszillators oder eines Generators erzeugt werden. Sie kann alternativ auch aus einzelnen Impulsen unterschiedlicher Breite und/oder Höhe derart zusammengesetzt werden, dass daraus ein sinusförmiger Spannungsverlauf entsteht.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Laborsiebmaschine mit einem elektro-magnetischen Antrieb, wobei der gegenüber dem Gehäuse beweglich angeordnete Siebträger über Federn gegen das Gehäuse abgestützt und mittels eines an ihm befestigten Ankers von einem gehäuseseitig angeordneten, frequenzerregten Elektromagneten beaufschlagt ist, **dadurch gekennzeichnet, dass** der Elektromagnet (11) mit einer in Frequenz und/oder Amplitude verstellbaren sinusförmigen Spannung versorgt wird.

2. Laborsiebmaschine nach Anspruch 1, **dadurch gekennzeichnet, dass** bei Ausführung des an dem Siebträger (12) befestigten Ankers (14) aus einem dauermagnetischen Material die Grundfrequenz der sinusförmigen Versorgungsspannung des Elektromagneten (11) der Siebfrequenz der Laborsiebmaschine entspricht.

3. Laborsiebmaschine nach Anspruch 1, **dadurch gekennzeichnet, dass** bei Ausführung des an dem Siebträger (12) befestigten Ankers (14)aus einem nicht-magnetischen, jedoch magnetisierbaren Werkstoff die Grundfrequenz der sinusförmigen Versorgungsspannung des Elektromagneten (11) der halben Siebfrequenz der Laborsiebmaschine entspricht.

4. Laborsiebmaschine nach einem der Ansprüche 1 bis 3, **dadurch gekennzeichnet, dass** die Größe der sinusförmigen Spannung bei gleich bleibender Frequenz zur Einstellung der Schwingweite des Siebträgers (12) verwendet wird.

5. Laborsiebmaschine nach einem der Ansprüche 1 bis 3, **dadurch gekennzeichnet, dass** die Höhe der Frequenz der sinusförmigen Spannung bei gleich bleibendem Effektivwert der Spannung zur Einstellung der Schwingweite des Siebträgers (12) verwendet wird.

6. Laborsiebmaschine nach einem der Ansprüche 1 bis 5, **dadurch gekennzeichnet, dass** die sinusförmige Spannung analog erzeugt wird.

7. Laborsiebmaschine nach einem der Ansprüche 1 bis 5, **dadurch gekennzeichnet, dass** die sinusförmige Spannung aus einzelnen Spannungsimpulsen zusammengesetzt ist.

8. Laborsiebmaschine nach einem der Ansprüche 1 bis 7, **dadurch gekennzeichnet, dass** runde Siebe auf dem Siebträger (12) befestigt sind.

9. Laborsiebmaschine nach einem der Ansprüche 1 bis 7, **dadurch gekennzeichnet, dass** eckige Siebe auf dem Siebträger (12) befestigt sind.

10. Laborsiebmaschine nach einem der Ansprüche 1 bis 9, **dadurch gekennzeichnet, dass** die Abmessung der Siebe > 300 mm beträgt.
